# FASCICULE DE BREVET EUROPEEN

(11) **EP 2 903 834 B1**
(45) Date de publication et mention de la délivrance du brevet: **08.06.2016**
(21) Numéro de dépôt: 13782805.9
(22) Date de dépôt: 07.10.2013
(51) Int. Cl.: B41M 5/24

(54) **PROCÉDÉ DE MARQUAGE EN SURFACE D'UNE PIÈCE MÉCANIQUE PAR UNE REPRÉSENTATION GRAPHIQUE PRÉDÉFINIE VISIBLE A L'OEIL NU**
VERFAHREN ZUR OBERFLÄCHENMARKIERUNG EINES MECHANISCHEN TEILS MITTELS EINER MIT BLOSSEM AUGE ERKENNBAREN VORDEFINIERTEN GRAFISCHEN DARSTELLUNG
METHOD FOR SURFACE MARKING A MECHANICAL PART WITH A PREDEFINED GRAPHIC REPRESENTATION VISIBLE TO THE NAKED EYE

(30) Priorité: 08.10.2012 FR 1259546
(43) Date de publication de la demande: 12.08.2015
(73) Titulaire: Snecma, 75015 Paris (FR)
(72) Inventeur: BILHE, Pascal, F-77550 Moissy-Cramayel Cedex (FR); BEGUE-DUTHU, Geoffrey, F-77550 Moissy-Cramayel Cedex (FR); GUIPONT, Vincent, F-89340 Villeblevin (FR)
(74) Mandataire: Boura, Olivier
(86) Numéro de dépôt international: PCT/FR2013/052374
(87) Numéro de publication internationale: WO 2014/057195

(56) Documents cités:
- EP-A2- 2 317 076
- WO-A1-2011/036087

## Description

### Arrière-plan de l'invention

La présente invention se rapporte au domaine général du marquage de pièces mécaniques.

Un domaine d'application de l'invention est celui du marquage de pièces aéronautiques, et notamment de pièces de turbomachines aéronautiques en vue d'assurer leur identification et leur authentification.

Dans le domaine aéronautique, il est connu d'apposer sur certaines pièces d'un moteur un numéro de série (sous la forme par exemple d'un code à base hexadécimale ou d'un code Datamatrix) permettant d'identifier ces pièces (on parle de marquage). A l'aide d'un tel numéro, il est possible de connaître avec exactitude l'authenticité des pièces et leur origine.

Le marquage est particulièrement recherché pour les aubes de turbine et de compresseur d'une turbomachine aéronautique. En effet, les aubes sont des pièces de rechange critiques dont il est important de connaître avec exactitude l'origine pour pouvoir prendre en compte l'influence du remplacement de ces pièces sur la durée de vie de la turbine ou du compresseur en question.

Le marquage de pièces, et notamment d'aubes de turbine ou de compresseur d'une turbomachine aéronautique, peut être réalisé de différentes manières. On connaît ainsi le marquage au moyen d'un laser venant réaliser en plusieurs passes une empreinte dans la pièce à marquer par enlèvement de matière. On connaît également le marquage mécanique à l'aide d'un marteau ou d'un piston pneumatique qui permet, par impacts successifs, d'imprimer sur la pièce à marquer un numéro de série. On connait encore le marquage réalisé au moyen d'une fraiseuse manuelle ou automatique.

Les techniques de marquage qui reposent sur le principe d'enlever de la matière ou de déformer la pièce à marquer afin d'y apposer le numéro de série voulu présentent un inconvénient évident sur la santé du matériau de la pièce à marquer. Dans le cas notamment d'une pièce réalisée dans un alliage métallique monocristallin, la déformation ou l'enlèvement de matière peut en effet conduire à une recristallisation localisée ou à un défaut de microstructure irréversible.

Par ailleurs, dans le cas d'aubes de turbine ou de compresseur, le marquage par ces techniques conventionnelles est généralement réalisé au niveau du pied des aubes. En effet, le marquage au niveau de la partie exposée aux gaz des aubes (à savoir la pale par exemple) n'est pas envisageable : le balayage des gaz sur la surface de ces zones risque d'entraîner un effacement du numéro de série par érosion/oxydation, voire par arrachement de matière. En outre, une amorce de fissure au niveau de l'emplacement du marquage peut apparaître en fatigue vibratoire.

Or, le marquage d'une aube au niveau de son pied pose le problème que le pied d'une aube est une zone qui est masquée une fois que l'aube est assemblée de sorte l'identification de celle-ci devient impossible lorsqu'elle est montée sur moteur.

EP-A-2 317 076 divulgue un procédé de marquage en surface d'une pièce de moteur à turbine à gaz par une représentation graphique prédéfinie (numéro **19** sur les Figures), comprenant l'application, au moyen d'une source de laser, d'une seule impulsion laser sur une surface extérieure d'une pièce à marquer. WO-A-2011/036087 divulgue un procédé similaire pour marquer une surface d'une pièce de moteur à turbine à gaz.

### Objet et résumé de l'invention

La présente invention a donc pour objet un procédé qui permet de réaliser de façon simple et rapide un marquage ne présentant pas les inconvénients précités.

Conformément à l'invention, ce but est atteint grâce à un procédé de marquage en surface d'une pièce mécanique par une représentation graphique prédéfinie, comprenant l'application, au moyen d'une source de laser, d'une seule impulsion laser sur une surface extérieure d'une pièce à marquer avec interposition entre la source de laser et la surface extérieure de la pièce d'un masque ayant une représentation graphique prédéfinie, l'impulsion laser ayant une puissance surfacique d'au moins 20 MW/cm² et une durée inférieure ou égale à 100ns.

La Demanderesse a constaté que l'application d'une impulsion laser dans les conditions précitées au travers d'un masque permet de réaliser un marquage (éventuellement visible à l'oeil nu selon le diamètre d'impact de l'impulsion laser) sur une pièce mécanique, et notamment une pièce de moteur à turbine à gaz, avec une très faible ablation de matière et une excellente tenue à des conditions oxydantes et à haute température. Notamment, il a été constaté que l'empreinte laissée par l'unique impulsion laser sur la surface de la pièce à marquer est très superficielle en profondeur (inférieure au micromètre). Il a également été constaté que l'empreinte réalisée par l'impulsion laser perdure même lorsqu'elle est soumise à haute température (de l'ordre de 1100°C) dans un environnement fortement oxydant.

De la sorte, pour une application au marquage d'aubes de compresseur ou de turbine, le procédé selon l'invention peut être appliqué au niveau de la partie des aubes qui est exposée aux gaz (i.e. au niveau de la pale), ce qui évite tous les inconvénients d'un marquage dans une zone masquée de l'aube. Notamment, l'identification des aubes par leur marquage est rendu possible même lorsque les aubes sont montées sur moteur.

De plus, il a été constaté que le procédé selon l'invention est tout aussi efficace (en termes de faible ablation de matière et de bonne tenue) que la pièce à marquer soit réalisée en métal (notamment Ni, Al, Ti, Fe, etc.), en matériau composite (notamment en fibres de carbone et matrice époxy) ou en céramique (notamment en zircone).

Enfin, le procédé selon l'invention est rapide (une seule impulsion laser est nécessaire), simple de mise en oeuvre (aucun apport de matière n'est nécessaire) et offre la possibilité de réaliser un marquage avec des formes complexes (par exemple le logo d'une société) en fonction du masque choisi.

Une lentille de focalisation peut être intercalée entre la source de laser et le masque afin de modifier la taille du faisceau émis par la source de laser. Celle-ci peut être un laser Nd-YAG. De plus, l'impulsion laser peut avoir un diamètre d'impact d'au moins 0,5mm, ce qui rend le marquage réalisé visible à l'oeil nu.

Lorsque la pièce à marquer est réalisée en métal, l'impulsion laser a de préférence une puissance surfacique comprise entre 0,04 GW/cm² et 0,55 GW/cm².

Lorsque la pièce à marquer est réalisée en matériau composite à fibres de carbone et matrice époxy, l'impulsion laser a de préférence une puissance surfacique comprise entre 0,15 GW/cm² et 2 GW/cm².

Lorsque la pièce à marquer est réalisée en céramique, l'impulsion laser a de préférence une puissance surfacique comprise entre 0,10 GW/cm² et 0,34 GW/cm².

Selon une disposition avantageuse, le procédé comprend en outre l'interposition entre la source de laser et la surface extérieure de la pièce d'un masque opaque ayant plusieurs dégradés de teinture de façon à obtenir un marquage multi-contrastes de la pièce. Le recours à un tel masque opaque permet de complexifier les marquages réalisés et de les rendre ainsi bien plus difficiles à reproduire.

L'invention concerne également l'application du procédé tel que défini précédemment au marquage d'une aube de soufflante, de turbine ou de compresseur d'une turbomachine aéronautique.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'un exemple de montage pour la mise en oeuvre du procédé ;
- les figures 2 à 4 sont des clichés montrant différents exemples de marquage réalisés au moyen du procédé selon l'invention ; et
- la figure 5 est une vue schématique d'un exemple de masque opaque pour la mise en oeuvre d'une variante de réalisation de l'invention.

### Description détaillée de l'invention

L'invention s'applique au marquage en surface par une représentation graphique prédéfinie de toute pièce mécanique, notamment aux pièces aéronautiques, et plus particulièrement aux pièces d'un moteur à turbine à gaz.

Par représentation graphique prédéfinie, on entend toute forme géométrique ou dessin prédéterminée, telle que par exemple un logo, un numéro de série, un code Datamatrix, etc.

Un exemple d'application non limitatif de l'invention est celui du marquage en surface d'aubes de soufflante, de turbine ou de compresseur d'une turbomachine aéronautique.

Le procédé selon l'invention comprend l'application d'une seule et unique impulsion laser sur la surface extérieure d'une pièce à marquer avec interposition entre la source de laser et la surface extérieure de la pièce d'un masque ayant la représentation graphique prédéfinie que l'on souhaite marquer sur la pièce.

Selon l'invention, l'impulsion laser qui est appliquée sur la surface extérieure de la pièce possède une puissance surfacique d'au moins 20 MW/cm² et une durée inférieure ou égale à 100 nanosecondes.

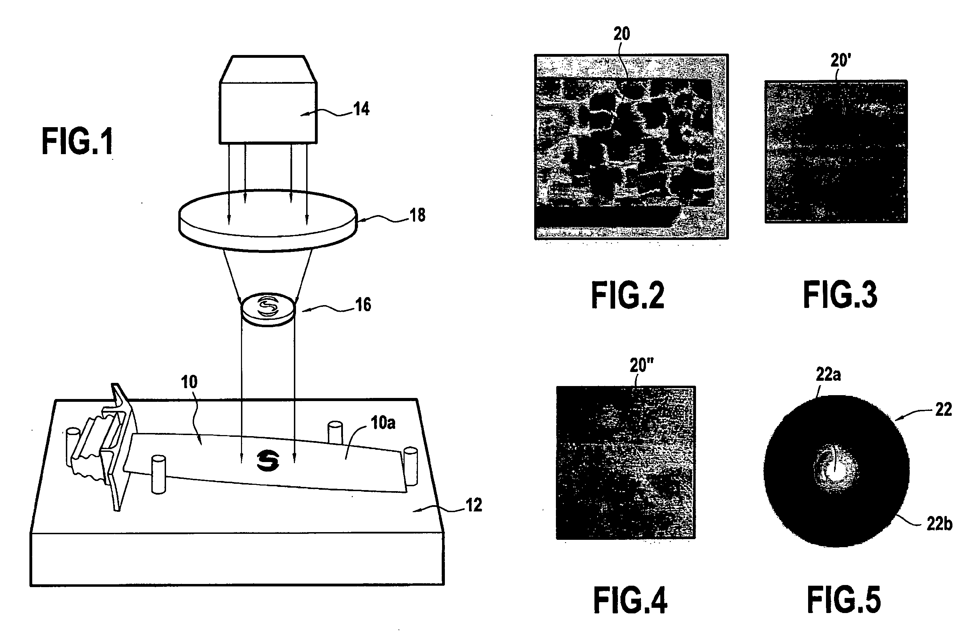

La figure 1 illustre schématiquement un exemple de montage pouvant être utilisé pour la mise en oeuvre du procédé de marquage selon l'invention.

Une pièce à marquer 10 (par exemple une aube de turbine) ayant une surface extérieure 10a sur laquelle doit être pratiquée le marquage est supportée par un bâti de maintien 12. La surface extérieure 10a de la pièce est tournée vers le haut.

Une source de laser 14, par exemple un laser de type Nd-YAG produisant un rayonnement de longueur d'onde de 1,064 µm doublée en fréquence, est positionnée au-dessus du bâti de maintien 12 et est configurée pour délivrer des impulsions ayant une puissance surfacique d'au moins 20 MW/cm² et une durée inférieure ou égale à 100 ns.

Par ailleurs, un masque 16 ayant une représentation graphique prédéfinie est intercalé entre la source de laser et la surface extérieure 10a de la pièce 10 à marquer. De même, une lentille de focalisation 18 (convergente ou divergente) est positionnée entre le laser 14 et le masque 16 afin d'adapter la taille du faisceau émis par le laser aux dimensions du masque.

De la sorte, le laser 14 produit un rayonnement qui est focalisé au moyen de la lentille de focalisation 18 en un faisceau traversant le masque 16 avant d'illuminer une zone choisie de la surface extérieure de la pièce. L'impulsion laser produite par le laser 14 engendre au niveau de cette zone un plasma dont l'expansion s'accompagne d'une importante libération d'énergie (thermomécanique et acoustique) à l'origine d'une modification locale à la surface de la pièce à marquer. Lorsque l'impulsion laser produite par le laser est paramétrée comme précisé précédemment (à savoir avec une puissance surfacique d'au moins 20 MW/cm² et une durée inférieure ou égale à 100 ns), cette modification locale à la surface de la pièce se traduit par une empreinte laissée à la surface de la pièce.

De la sorte, le marquage obtenu par le procédé selon l'invention se présente sous la forme d'une empreinte laissée à la surface de la pièce, cette empreinte possédant un dessin correspondant à celui du masque utilisé (celui-ci joue le rôle de négatif).

Cette empreinte présente des dimensions, à savoir un diamètre, correspondant au diamètre d'impact de l'impulsion laser produite par le laser. Ainsi, avec un diamètre d'impact d'au moins 0,5mm pour l'impulsions laser, le marquage obtenu présente un diamètre d'au moins 0,5mm (ce qui permet de le rendre visible à l'oeil nu). Ce diamètre peut aller jusqu'à 150mm (si besoin en recourant à une lentille de focalisation 18 qui est divergente).

Il a été constaté que, lorsque l'impulsion laser est appliquée dans de telles conditions, une seule et unique impulsion est nécessaire pour réaliser un marquage de la pièce. Notamment, il n'est pas nécessaire d'appliquer plusieurs impulsions laser sur la même zone pour obtenir un tel résultat.

Il a également été constaté au moyen d'un profilomètre que l'empreinte laissée à la surface extérieure 10a de la pièce 10 est très superficielle en profondeur (inférieure au micromètre) quel que soit le diamètre d'impact et le matériau de la pièce (métal, céramique ou composite).

Il a encore été constaté que le marquage obtenu, bien que de profondeur très superficielle, résiste à un environnement fortement oxydant et à haute température. En particulier, des essais ont permis de montrer la persistance d'un tel marquage (réalisé sur une pièce en nickel) à la suite de 700 cycles de 1h chacun sous air à 1100°C.

On notera que la présence d'un milieu de confinement transparent à la longueur d'onde du laser utilisé (tel que par exemple de l'eau ou du verre pour un laser de type Nd-YAG) pour permettre une meilleure détente du plasma engendré par le laser n'est pas nécessaire pour réaliser un marquage.

De même, on notera que le marquage peut être réalisé sous atmosphère ambiante, à condition de limiter la puissance surfacique de l'impulsion laser produite par le laser à 10 GW/cm² (qui correspond au seuil de claquage de l'air). Pour des valeurs de puissance surfacique supérieures à 10 GW/cm², le marquage devra être réalisé sous vide.

Le procédé de marquage selon l'invention peut être appliqué à tout type de matériau. Il est en particulier parfaitement adapté au marquage de pièces en métal, en céramique ou en matériau composite. Il s'applique également à tout matériau de revêtement de surface d'une pièce.

Dans le cas d'une pièce à marquer réalisée en métal, on appliquera une puissance surfacique comprise de préférence entre 0,04 GW/cm² et 0,55 GW/cm² de sorte à obtenir une empreinte parfaitement intelligible.

Plus précisément, dans le cas d'une pièce en nickel, on appliquera avantageusement une puissance surfacique comprise entre 0,10 GW/cm² et 0,52 GW/cm². Dans le cas d'une pièce en aluminium, on appliquera une puissance surfacique comprise entre 0,20 GW/cm² et 0,55 GW/cm², et dans le cas d'une pièce en acier, on appliquera une puissance surfacique comprise de préférence entre 0,10 GW/cm² et 0,50 GW/cm².

Par ailleurs, dans le cas d'une pièce à marquer réalisée en matériau composite à fibres de carbone et matrice époxy, l'impulsion laser aura de préférence une puissance surfacique comprise entre 0,15 GW/cm² et 2 GW/cm² de sorte à obtenir une empreinte parfaitement intelligible.

Enfin, dans le cas d'une pièce à marquer réalisée en céramique, l'impulsion laser aura de préférence une puissance surfacique comprise entre 0,10 GW/cm² et 0,34 GW/cm² de sorte à obtenir une empreinte parfaitement intelligible.

En liaison avec les figures 2 à 4, on décrira maintenant différents exemples de marquage réalisés au moyen du procédé selon l'invention.

La figure 2 est un cliché (échelle 4:1) montrant le résultat de l'application d'une impulsion laser conformément au procédé selon l'invention sur un substrat en matériau composite de type carbone-carbone.

Le marquage 20 visible à l'oeil nu sur cette figure et de forme circulaire a été obtenu au moyen d'une seule et unique impulsion laser de diamètre d'impact 8,7 mm, de puissance surfacique égale à 99 MW/cm² et d'une durée de 5,2 ns. Le masque utilisé ne possédait aucune représentation graphique.

De même, la figure 3 est un cliché (échelle 4:1) montrant le résultat de l'application d'une impulsion laser conformément au procédé selon l'invention sur un substrat en dioxyde de zirconium (ZrO₂/Y₂O₃).

Le marquage 20' visible à l'oeil nu sur cette figure et de forme circulaire a été obtenu au moyen d'une seule et unique impulsion laser de diamètre d'impact 9,1 mm, de puissance surfacique égale à 135 MW/cm² et d'une durée de 5,2 ns. Le masque utilisé ne possédait aucune représentation graphique.

Enfin, la figure 4 est un cliché (échelle 4:1) montrant le résultat de l'application d'une impulsion laser conformément au procédé selon l'invention sur un substrat en aluminium.

Le marquage 20" visible à l'oeil nu sur cette figure et de forme circulaire a été obtenu au moyen d'une seule et unique impulsion laser de diamètre d'impact 13 mm, de puissance surfacique égale à 41 MW/cm² et d'une durée de 5,2 ns. Le masque utilisé ne possédait aucune représentation graphique.

L'ensemble de ces clichés montrent que l'application d'une seule et unique impulsion laser dans les conditions de puissance surfacique et de durée précitées permet d'obtenir un marquage parfaitement intelligible quel que soit le matériau de la pièce (ou de son revêtement de surface) à marquer, ce marquage étant sans nocivité pour le matériau de la pièce et résistant à un environnement à la fois oxydant et à haute température.

Selon une disposition avantageuse, il est prévu d'interposer entre la source de laser et la surface extérieure de la pièce à marquer un masque additionnel, dit « masque opaque ». Ce masque opaque s'ajoute au masque 16 ayant une représentation graphique prédéfinie et préalablement décrit (le masque opaque est indifféremment positionné en amont ou en aval du masque 16 selon le sens du trajet du faisceau laser).

Le masque opaque se présente sous la forme d'un masque comprenant un milieu (liquide ou vitreux par exemple) ayant une pluralité de dégradés de teinture de sorte à obtenir un marquage multi-contrastes de la pièce.

En particulier, le masque opaque sera choisi de façon à ce qu'il permette une atténuation maîtrisée de l'intensité de la source de laser en fonction du motif du masque à reproduire sur la pièce. Ainsi, les zones du masque opaque peu atténuées laisseront passer une plus grande intensité laser, tandis que les zones fortement atténuées ne laisseront passer qu'une très faible intensité laser.

La figure 5 représente un exemple de masque opaque 22 pouvant être utilisé pour obtenir un dégradé de contrastes pour le marquage. Dans cet exemple, ce masque opaque 22 comprend une zone centrale 22a faiblement atténuée et une zone périphérique 22b plus fortement atténuée. L'application d'un tel masque opaque permet ainsi d'obtenir une représentation graphique ayant un dégradé de contrastes entre la zone centrale et la zone périphérique de cette représentation.

## Revendications

1. Procédé de marquage en surface d'une pièce mécanique par une représentation graphique prédéfinie, comprenant l'application, au moyen d'une source de laser, d'une seule impulsion laser sur une surface extérieure d'une pièce à marquer avec interposition entre la source de laser et la surface extérieure de la pièce d'un masque ayant une représentation graphique prédéfinie, l'impulsion laser ayant une puissance surfacique d'au moins 20 MW/cm² et une durée inférieure ou égale à 100 ns.

2. Procédé selon la revendication 1, dans lequel une lentille de focalisation est intercalée entre la source de laser et le masque.

3. Procédé selon l'une des revendications 1 et 2, dans lequel la source de laser est un laser Nd-YAG.

4. Procédé selon l'une quelconque des revendications 1 à 3, dans lequel l'impulsion laser a un diamètre d'impact d'au moins 0,5mm.

5. Procédé selon l'une quelconque des revendications 1 à 4, dans lequel, lorsque la pièce à marquer est réalisée en métal, l'impulsion laser a une puissance surfacique comprise entre 0,04 GW/cm² et 0,55 GW/cm².

6. Procédé selon l'une quelconque des revendications 1 à 4, dans lequel, lorsque la pièce à marquer est réalisée en matériau composite à fibres de carbone et matrice époxy, l'impulsion laser a une puissance surfacique comprise entre 0,15 GW/cm² et 2 GW/cm².

7. Procédé selon l'une quelconque des revendications 1 à 4, dans lequel, lorsque la pièce à marquer est réalisée en céramique, l'impulsion laser a une puissance surfacique comprise entre 0,10 GW/cm² et 0,34 GW/cm².

8. Procédé selon l'une quelconque des revendications 1 à 7, comprenant en outre l'interposition entre la source de laser et la surface extérieure de la pièce d'un masque opaque ayant plusieurs dégradés de teinture de façon à obtenir un marquage multi-contrastes de la pièce.

9. Application du procédé selon l'une quelconque des revendications 1 à 8 au marquage d'une aube de soufflante, de turbine ou de compresseur d'une turbomachine aéronautique.

## Patentansprüche

1. Verfahren zur Oberflächenmarkierung eines mechanischen Teils mit einer vordefinierten graphischen Darstellung, umfassend die Anwendung eines einzigen Laserpulses mittels einer Laserquelle auf eine Außenfläche eines zu markierenden Teils, unter Zwischenschalten einer Maske, die eine vordefinierte graphische Darstellung aufweist, zwischen der Laserquelle und der Außenfläche des Teils, wobei der Laserpuls eine Flächenleistung von wenigstens 20 MW/cm² und eine Dauer von weniger als oder gleich 100 ns hat.

2. Verfahren nach Anspruch 1, bei dem eine Fokussierlinse zwischen der Laserquelle und der Maske eingefügt ist.

3. Verfahren nach einem der Ansprüche 1 und 2, bei dem die Laserquelle ein Nd:YAG-Laser ist.

4. Verfahren nach einem der Ansprüche 1 bis 3, bei dem der Laserpuls einen Auftreffdurchmesser von wenigstens 0,5 mm aufweist.

5. Verfahren nach einem der Ansprüche 1 bis 4, bei dem, wenn das zu markierende Teil aus Metall gefertigt ist, der Laserpuls eine Flächenleistung im Bereich zwischen 0,04 GW/cm² und 0,55 GW/cm² aufweist.

6. Verfahren nach einem der Ansprüche 1 bis 4, bei dem, wenn das zu markierende Teil aus Verbundwerkstoff mit Kohlenstofffasern und Epoxid-Matrix gefertigt ist, der Laserpuls eine Flächenleistung im Bereich zwischen 0,15 GW/cm² und 2 GW/cm² aufweist.

7. Verfahren nach einem der Ansprüche 1 bis 4, bei dem, wenn das zu markierende Teil aus Keramik gefertigt ist, der Laserpuls eine Flächenleistung im Bereich zwischen 0,10 GW/cm² und 0,34 GW/cm² aufweist.

8. Verfahren nach einem der Ansprüche 1 bis 7, ferner umfassend das Zwischenschalten einer opaken Maske, die mehrere Farbschattierungen aufweist, zwischen der Laserquelle und der Außenfläche des Teils, um eine Multikontrast-Markierung des Teils zu erhalten.

9. Anwendung des Verfahrens nach einem der Ansprüche 1 bis 8, auf die Markierung einer Gebläse-, Turbinen- oder Verdichterschaufel einer Turbomaschine eines Luftfahrzeugs.

## Claims

1. A method of surface marking a mechanical part with a predefined graphical representation, the method comprising using a laser source to apply a single laser pulse to an outside surface of a part for marking with a mask being interposed between the laser source and the outside surface of the part, the mask having a predefined graphical representation, and the laser pulse having power flux density of at least 20 MW/cm² and a duration less than or equal to 100 ns.

2. A method according to claim 1, wherein a focusing lens is interposed between the laser source and the mask.

3. A method according to claim 1 or claim 2, wherein the laser source is an Nd-YAG laser.

4. A method according to any one of claims 1 to 3, wherein the laser pulse has an impact diameter of at least 0.5 mm.

5. A method according to any one of claims 1 to 4, wherein, when the part for marking is made of metal, the laser pulse has power flux density lying in the range 0.04 GW/cm² to 0.55 GW/cm².

6. A method according to any one of claims 1 to 4, wherein, when the part for marking is made of composite material comprising carbon fibers and an epoxy matrix, the laser pulse has power flux density lying in the range 0.15 GW/cm² to 2 GW/cm².

7. A method according to any one of claims 1 to 4, wherein, when the part for marking is made of ceramic, the laser pulse has power flux density lying in the range 0.10 GW/cm² to 0.34 GW/cm².

8. A method according to any one of claims 1 to 7, further including interposing an opaque mark between the laser source and the outside surface of the part, the opaque mark having a plurality of color gradations so as to obtain multi-contrast marking of the part.

9. The use of the method according to any one of claims 1 to 8 for marking a fan blade, a turbine blade, or a compressor blade of an aviation turbine engine.
